## Europäisches Patentamt
## European Patent Office
## Office européen des brevets

(19)

(11) Publication number: **0 333 673**
**A1**

# EUROPEAN PATENT APPLICATION

(12)

(21) Application number: **89830117.1**

(22) Date of filing: **15.03.89**

(51) Int. Cl.⁴: **A 61 C 17/04**
**C 02 F 1/70**

(30) Priority: **18.03.88 IT 338188**

(43) Date of publication of application:
**20.09.89 Bulletin 89/38**

(84) Designated Contracting States:
**CH DE ES FR GB GR LI SE**

(71) Applicant: **CASTELLINI S.p.A.**
**Via Saliceto, 22**
**I-40013 Castelmaggiore (Bologna) (IT)**

(72) Inventor: **Lenzi, Plinio Maria**
**Via Leonello Spada, 47**
**I-40129 Bologna (IT)**

**Sacchetti, Enzo**
**Via Toscana, 12/2**
**I-40141 Bologna (IT)**

(74) Representative: **Lanzoni, Luciano**
**c/o BUGNION S.p.A. Via Farini, 37**
**I-40124 Bologna (IT)**

(54) **A method and device for the separation of pollutant metal particles or metal compounds, e.g. amalgam, in waste liquids discharged from dental surgery equipment.**

(57) The method and the device provide for a sequence of steps: a first, in which heavier solid particles entrained in the waste liquid (13) are allowed to settle in a trap (1), a second in which lighter and smaller particles are filtered out, and a further step of reducing infinitely small ionic particles dissolved in the liquid by inducing electrolysis with a metal less noble than that contained in the ions, i.e. of higher electropositive potential, such that dissolved matter is deposited onto the electrode (5).

## Description

## A method and device for the separation of pollutant metal particles or metal compounds, e.g. amalgam, in waste liquids discharged from dental surgery equipment

The invention relates to a method of separating pollutant metal particles or metal compounds, for example mercury amalgam, entrained and dissolved in waste liquids discharged from surgery equipment, in particular dental surgery equipment.

Hygiene constitutes a fundamental requirement in preventing numerous diseases, some of which highly dangerous as in the case of Hepatitis B, and takes on particular importance in the medical surgery.

In effect, hygiene becomes an absolute necessity by reason of the fact that the medical practitioner operates on certain key routes of infection, such as open wounds, the oral cavity, etc...

Whilst extensive care is thus exercised in medical hygiene to the end of protecting persons operating and treated in the surgery, the surgery can itself prove to be a source of pollution in the external environment, caused by the materials employed in treatment and discharged from equipment. In dental surgery, for instance, use is made of amalgams, i.e. mercury blended with one or more metals, for the purpose of filling decayed teeth; once a tooth has been filled, the solidified amalgam must be shaped mechanically in order to match the contour of the original tooth, as near as possible.

The various steps of the filling operation are thus effected internally of the patient's mouth, with the dentist making use of power driven abrasive instruments connected up to a special stand, or pedestal. Particles shed by abrasion, together with saliva and with water sprayed from the instrument handpiece, are removed from the patient's mouth by suction, using cannulae and pump units, and/or spat out into the pedestal spittle bowl, and discharged ultimately through a waste outlet.

The main waste pipe from the equipment incorporates a trap, which is in receipt of all soiled liquids from the pedestal, including those from the spittle bowl and its water tap, and serves to separate the solid particles entrained in these liquids.

The trap consists in a receptacle with an inlet and outlet, both located at the top, and an internal funnel element positioned immediately upstream of the outlet in such a way as to create an inverted siphon capable of reducing the inlet velocity of the discharging liquid; solids are thus able to settle at the bottom of the receptacle, and can be removed periodically when the trap is serviced. By contrast, certain lighter pollutant particles, and those of infinitely small dimensions, neither separate nor settle in the receptacle, but pass straight through into the main drain without being in any way recovered or neutralized; a notable case in point is that of the amalgam fillings mentioned above, mercury from which remains dissolved in the discharging water in the form of ions.

In effect, mercury is not easily soluble in water, i.e. 0.28 $\mu$M/l, which corresponds to a concentration of $56.1652 \times 10^{-6}$; nonetheless, this figure is at least ten times the acknowledged limit (Italy) for sewage, namely $5 \times 10^{-6}$.

The serious aspect of such a situation is that, for the most part, dental surgeries are privately owned and located in residential premises where there are no waste purification systems installed.

Accordingly, the object of the present invention is to provide a device that enables substantially a total separation of pollutant particles entrained by or dissolved in waste liquids discharged from medical surgery equipment.

The stated object is achieved, according to the present invention, with a method and a device able to reduce pollution in waste liquids discharged from medical surgery equipment by causing heavier solid particles to settle in a trap, collecting lighter and smaller particles by filtration, and inducing the reduction and deposition of infinitely small dissolved particles, or ions, by exposure to a metal less noble that the pollutant metal, that is, a metal of higher electropositive potential. Thus, the invention consists in bringing about an electrochemical reaction between a metal less noble than mercury, constituting an electrode medium, and a solution of Hg ions providing an electrolyte, in short: electrolysis, occasioned by the difference in potential between the two metals, the ionization energy of which is proportionate to the required electrochemical effect.

A first advantage of the invention is that it sets forth an expedient simple in terms of construction and operation, and practical and reliable in use. A further advantage of the invention is that of the speed and economy with which such an expedient can be integrated into conventional devices; all that is required, in effect, is to fit a conventional type trap with a suitable filter element, and with an electrode medium fashioned from a metal less noble than the pollutant metal, to obtain a device capable even of eliminating particles that may be dissolved in waste liquids as ions.

Another advantage of the invention is that of low cost operation, permitted by the use of simple, easily replaced parts.

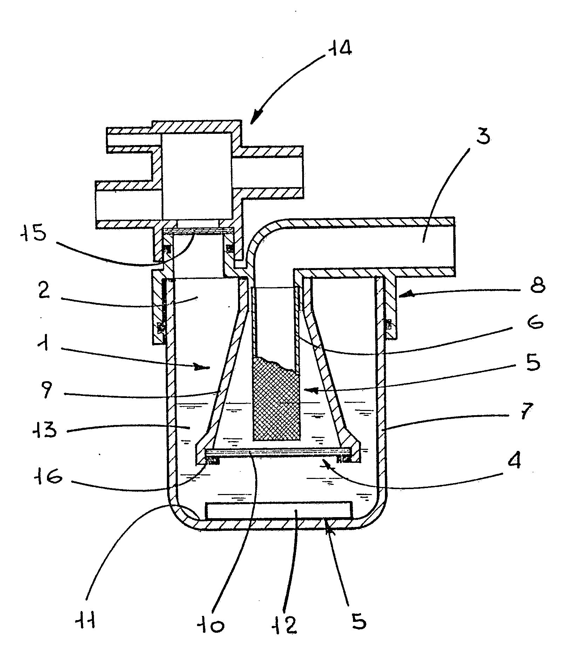

The invention will now be described in detail, by way of example, with the aid of the accompanying drawing, which shows a preferred embodiment of the device illustrated in vertical section. The method according to the invention consists in separating pollutant particles from waste liquids discharged by medical surgery equipment, and comprises:
- a first step of causing heavier solid particles entrained in the waste liquid to settle, by means of a trap device 1;
- a second step of filtering smaller and lighter solid particles suspended in the liquid by means of a filtration device 4;
- a third step of bringing about the deposition of infinitely small pollutant particles dissolved in the waste liquid, effected by inducing ion exchange with a metal less noble, i.e. electropositive to a greater degree, than the pollutant metal to be separated from the liquid 13.

With reference to the drawing attached, 'a preferred embodiment of the device for separating pollutant solid metal particles or metal compounds entrained and dissolved in waste liquid 13 discharged from surgery equipment, and in particular dental surgery equipment, consists in an assembly of components comprising, in sequence along the path of flow:

-a trap 1, of which the inlet 2 and outlet 3 are positioned uppermost;

-a filtration device 4;

-an electrode medium 5 serving to bring about the reduction of pollutant particles, or ions (mercury, by way of example), dissolved in the liquid 13.

The trap 1 consists in a transparent bowl 7, capped by a top cover 8; the inlet 2 and the outlet 3 are incorporated into the cover 8, offset and coaxially aligned, respectively, with the bowl 7. The inlet 2 connects externally of the bowl 7 with a multi way fitting 14, attached to the cover 8, to which the single surgery equipment waste lines are connected.

In the event of the device according to the present invention being utilized in a dental surgery, the various waste lines from the equipment pedestal will be connected to this fitting 14, as also might be the basin used by the practitioner to wash his or her hands.

15 denotes a diaphragm type check valve associated with the inlet fitting 14, or with the port boss of the inlet 2, the purpose of which is to admit waste liquids 13 and entrained solids discharged from the various items of equipment, whilst preventing any possibility of their returning in the event of a blockage downstream.

The stream of liquid 13 will be vortiginous through the inlet 2, but grows less turbulent as the cross section of the flow path widens; thus, an initial separating action takes place at the bottom of the bowl 7, with the heavier solid particles settling naturally, following which the liquid finds its way up toward the outlet 3 in the top cover 8. The port boss of the outlet 3 projects cylindrically into the bowl and is ensheathed by a removable funnel 9, preferably exhibiting transverse dimensions that taper upwards toward a top end which attaches to the cover 8 in a screw or bayonet type fit.

Both the funnel 9 and the bowl 7 are embodied in transparent material, for reasons that will shortly be made clear.

In the embodiment shown, the filtration device 4 consists in a filter element 10 associated with the bottom end of the funnel 9, the funnel affording a peripheral seat in which the element 10 registers to an exact fit, and held in place by removable, normally-expanded spring retention means 16.

The filter element 10 may be fashioned either from synthetic or glass fibre suitably impregnated with clarifying agents (activated carbon, etc...), or in a metal capable of triggering the electrochemical reducing action disclosed, thereby combining the steps of filtration and electrolysis into one.

A certain clearance will be left between the filter element 10 and the bottom 11 of the bowl 7, so as to leave room for precipitation and subsequent removal of the heavier solid particles.

The electrode medium 5 consists substantially in an element 6 fashioned from a metal less noble than mercury, i.e. electropositive to a greater degree, capable of reducing mercury ions to the metallic state and bringing about their deposition on its surface. The shape of such an element 6 will be such as to ensure that a maximum of its surface area is exposed to the waste liquid 13.

In the preferred embodiment illustrated, by way of example, the electrode medium 5 consists in one or more brass mesh strainers pressed into cylindrical shape and positioned in the outlet 3 of the cover 8 internally of the funnel 9, thereby constituting a removable inward extension of the outlet port boss; alternatively, the cylinder could be embodied as a wire wool filter, or a set of thin parallel strips (likewise brass, or other suitable metal) shaped into an essentially honeycomb or similar cellular structure such as will offer the maximum possible surface area to the electrolyte, that is, to the waste liquid 13.

To enhance efficiency of the oxidation-reduction process, substances may be added to step up the ion exchange by modifying the chemical-and-physical properties of the waste liquid 13. For example, ion exchange will be favoured in a neutral or mildly acid liquid, say, of pH-value between 5.5 and 6. To this end, the option exists of placing such a substance inside the bowl 7, for example, in the form of a tablet 12 composed of chemicals that will dissolve slowly, gradually and continuously in the waste liquid 13, thereby maintaining the liquid neutral, or perhaps mildly acid.

The tablet 12 could comprise, for example, citric acid or another weak acid, or an acid hydrolyzing salt, buffered to prevent excessive acidification the results of which would be to upset the balance of the chemical processes and discharge a too-acid liquid into the main drain.

Similarly, in accordance with the stated objects of the present invention, a slow-dissolving solid product might be put into the bowl 7 to the end of releasing disinfectant into the waste liquid 13 (e.g. a chlorine bearing substance, or a phenol, etc.) and thus destroying a notable quantity of pathogenic microorganisms which would otherwise find a friendly environment in the organic matter discharged and profilerate uncontrolled. The waste pipeline is rendered more hygienic in this manner, and handling of the trap 1, in particular, emptying deposited matter and cleaning the bowl 7, is made safer for a person effecting servicing operations.

To practical advantage, the ion exchange enhancer and the disinfectant might be combined in a single tablet 12, and moreover, an electrode medium 5 identical or similar to that described, fashioned from a metal less noble than mercury, could in its turn be associated physically with the tablet 12; thus, the tablet 12 can be either combined with the electrode medium 5, internally of the funnel 9, or used on its own in place of the electrode.

Operation of the device will now be described, with reference to the drawing.

The flow of waste liquid 13, with its charge of pollutant particles, enters the trap 1 from the top by way of the inlet 2, filling the bowl 7, then rises through the funnel 9 toward the cover 8 and out into the main drain by way of the outlet 3.

The different velocities set up in the discharging stream are such that heavier particles settle at the bottom of the bowl 7, whereas the lighter and smaller particles, failing to precipitate and thus remaining suspended in the liquid, are held by the filter element 10 positioned across the mouth of the funnel 9, that is, before being allowed to rise to the outlet 3.

Waste liquid 13 rising through the funnel 9 washes over and/or flows through the electrode medium 5, which collects Hg + + mercury ions as the result of the following electrochemical reaction, where Me is the suitable less noble metal:

$$Me + HG + + \rightarrow Me + + + Hg$$

When the various items of surgery equipment are in use, the trap 1 will be invested by all such waste liquids 13 as flow through the lines connected to the fitting 14. A certain period having elapsed, deposits will begin to appear at the bottom of the bowl 7, whereupon the bowl 7 itself can be removed easily from the cover 8 and cleaned, and the filter element 10 unseated from the funnel 9 by removing the spring fastener 16, and replaced.

The electrode medium 5 can also be replaced with a clean component when signs of saturation begin to appear (e.g. a change of colour discernible through the transparent material of the trap 1), following removal of the bowl 7 and the funnel 9.

The inclusion of the filter element 10 at bottom also prevents smaller and lighter particles of matter suspended in the waste liquid 13 from continuing toward the outlet 3, and in so doing, blocking the pores or passages of an electrode medium 5 fashioned in mesh or cellular material.

## Claims

1) A method of separating pollutant metal particles, e.g. amalgam, in waste liquids discharged from dental surgery equipment, characterized
in that it comprises:
-a first step of separating heavier solid particles and suspended particles from the waste liquid (13);
-a second step of bringing about the chemical deposition of pollutant particles dissolved in the liquid by inducing ion exchange with a metal less noble, hence electropositive to a greater degree, than the pollutant metal to be separated from the liquid.

2) A method as in claim 1, wherein the first step consists in:
-an initial step of causing heavier solid particles entrained in the waste liquid (13) to settle;
-a further step of filtering smaller and lighter solid particles held in suspension by the liquid.

3) A method of separating pollutant metal particles, e.g. amalgam, in waste liquids discharged from dental surgery equipment, characterized
in that it comprises:
a first step of causing heavier solid particles entrained in the waste liquid (13) to settle;
-a second step of filtering smaller and lighter solid particles held in suspension by the liquid;
-a third step of bringing about the chemical deposition of pollutant particles dissolved in the liquid by inducing ion exchange with a metal less noble, hence electropositive to a greater degree, than the pollutant metal to be separated from the liquid.

4) A method as in claim 1, wherein the chemical deposition step is implemented simultaneously with the filtration step.

5) A method as in claim 3, wherein the chemical deposition step is implemented simultaneously with the filtration step.

6) A method as in claim 1 or 3, comprising the further step of adding substances to the waste liquid such as will enhance or accelerate chemical deposition.

7) A method as in claim 1 or 3, comprising the further step of adding disinfectant substances to the waste liquid.

8) A method as in claim 1 or 3, comprising the further step of adding substances to the waste liquid such as will enhance or accelerate chemical deposition and disinfect the liquid.

9) A device for implementation of the method as in claim 1 or 3, comprising:
-a water-tight trap device (1) incorporating at least one means of separating solid pollutant metal particles or metal compounds;
-at least one electrode medium (5) by means of which to induce ion exchange, consisting in a metal less noble, i.e. electropositive to a greater degree, than the pollutant metal to be separated from the waste liquid (13).

10) A device for separating pollutant metal particles or metal compounds, e.g. amalgam, in waste liquids discharged from dental surgery equipment, characterized
in that it comprises, in sequence along the flow path of the liquid:
-a trap device (1) with inlet (2) and outlet (3) uppermost, internally of which the stream of liquid is vortiginous at first, thereafter becoming less turbulent and rising laminar toward the outlet (3) in such a way that heavier and larger entrained solid particles settle at the bottom of the trap;
-a device (4) for the filtration of smaller and lighter solid particles held in suspension by the stream of liquid (13);
-an electrode medium (5) serving to bring about reduction of pollutant metal dissolved in the liquid (13), which consists in an element (6) fashioned from a metal less noble, i.e. electropositive to a greater degree, than the pollutant metal, and capable of forming insoluble compounds with the pollutant metal.

11) A device as in claim 9 or 10, further comprising means by which to effect a continuous dissolution in the waste liquid (13) of substances serving to enhance or accelerate the chemical deposition step.

12 A device as in claim 9 or 10, further comprising means by which to effect a continuous dissolution of disinfectant substances in the waste liquid (13).

13) A device as in claim 10, wherein the trap (1) consists in a bowl (7) capped uppermost by a cover (8) incorporating the inlet (2) and the outlet (3) such that the internal port boss of the outlet projects toward the bottom (11) of the bowl (7), further comprising:

-a funnel (9), positioned internally of the bowl and disposed with axis vertical, the top end of which is fitted removably over the port boss of the outlet (3);

-a filter element (10), attached removably to the remaining end of the funnel (9) and constituting the filtration device (4).

14) A device as in claim 13, wherein the funnel (9) is in the shape of a hollow cone frustum of which the smaller base is fitted over the outlet (3), and the larger base affords a peripheral internal seat for accommodation of the filtration device (4).

15) A device as in claim 5 or 6, wherein the electrode medium (5) is positioned inside the trap (1), internally of the bowl (7).

16) A device as in claim 13, wherein the electrode medium (5) is positioned internally of the funnel (9) carrying the filtration device (4), located between the filter element (10) and the outlet (3) in the top cover (8).

17) A device as in claim 9 or 10, wherein the electrode medium (5) is embodied with a cellular structure.

18) A device as in claim 13, wherein the electrode medium (5) is embodied with a cellular structure and associated removably with the funnel (9).

19) A device as in claim 17 or 18, wherein the cellular structure affords filtration means in addition to or in the absence of the filtration device (4).

20) A device as in claim 19, wherein the filtration means are associated removably with the outlet (3) in the top cover (8).

21) A device as in claim 18, wherein the electrode medium (5) is cylindrical in shape and associated removably with the outlet (3) in the top cover (8) in such a way as to constitute an inward extension of the outlet.

22) A device as in claim 11, wherein means by which to effect a continuous dissolution in the waste liquid (13) of substances serving to enhance or accelerate the chemical deposition step consist in a tablet formulated from chemicals designed to ensure slow, gradual and continuous dissolution of electrolysis-enhancing-or-accelerating substances in the waste liquid.

23) A device as in claim 12, wherein means by which to effect a continuous dissolution of disinfectant substances in the waste liquid (13) consist in a tablet formulated from chemicals designed to ensure a slow, gradual and continual dissolution of disinfectant substances in the waste liquid.

24) A device as in claim 22 or 23, wherein the tablet is formulated from chemicals designed to ensure a slow, gradual and continuous dissolution in the waste liquid both of disinfectant substances and of electrolysis-enhancing or-accelerating substances.

25) A device as in claim 9 or 10 and claim 22, wherein the electrode medium (5) is associated physically with the tablet.

26) A device as in claim 13, wherein the bowl (7) and the funnel (9) are embodied in transparent material in order to enable a visual inspection of the extent to which pollutant metal particles and metal compounds entrained and dissolved in the waste liquid (13) have settled and been filtered, and reduced and deposited on the electrode medium (5).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 096 670 (LEIF ERNRYD AB) <br> * Page 1, lines 1-4; page 7, line 12 - page 2, line 8 * | 1-3,9, 10 | A 61 C 17/04 <br> C 02 F 1/70 |
| Y | US-A-3 802 910 (GAF CORPORATION) <br> * Column 11, claims 1,3 * | 1-3,9, 10 | |
| A | FR-A-2 230 592 (KEMANORD) <br> * Page 2, lines 1-20 * | 6-8,11, 12,22-24 | |
| A | US-A-4 692 335 (PPG INDUSTRIES) <br> * Column 1, lines 5-10; column 3, lines 33-45 * | 7,23 | |
| A | FR-A-1 214 044 (AUGUST KLÜBER) <br> * Page 2, abstracts 1,2a * | 26 | |

TECHNICAL FIELDS SEARCHED (Int. Cl.4)

C 02 F
A 61 C

The present search report has been drawn up for all claims

| Place of search | Date of completion of the search | Examiner |
|---|---|---|
| THE HAGUE | 23-06-1989 | TEPLY J. |